# EUROPEAN PATENT APPLICATION

(11) **EP 4 683 102 A2**
(43) Date of publication of application: **21.01.2026**
(21) Application number: 25182335.7
(22) Date of filing: 12.06.2025
(51) Int. Cl.: H01M 50/536, H01M 50/538

(54) **ELECTROLYTE AND BATTERY INCLUDING THE SAME**

(30) Priority: 17.07.2024 CN 202421701141 U
(71) Applicant: AESC Japan Ltd., Yokohama-Shi, Kanagawa 220-0012 (JP)
(72) Inventor: LI, Qiankun, Jiangyin City, Wuxi City, 214443 (CN)
(74) Representative: Becker, Eberhard

(57) **Abstract**

A battery (100) and an electronic device are provided. The battery (100) includes a housing assembly (5), a bare cell (1), and an electrode adapting piece (2). The bare cell (1) is disposed within the housing assembly (5) and includes a positive electrode piece (111), a negative electrode piece (112), and a separator (113), which are stacked sequentially and wound around a winding axis. An end of the bare cell (1) along the winding axis is provided with a tab (114). The electrode adapting piece (2) is welded with the tab (114), and forms at least one continuous welding mark (3). At least part of the welding mark (3) extends from an outer periphery of the bare cell (1) to an inner periphery. The welding mark (3) includes an arc segment (32), and a curvature radius of the welding mark (3) is greater than or equal to 0.5mm.

## Description

### BACKGROUND

### Technical Field

The disclosure relates to a field of battery technology, and in particular to a battery and an electronic device.

### Description of Related Art

With the development of economy in society, batteries are used as energy storage and supply devices in many electrical equipment, such as new energy vehicles, communication base stations, and energy storage containers. The battery typically includes an internal bare cell and a housing assembly. A tab of the bare cell is connected to an electrode output end on the battery through an electrode adapting piece to achieve conduction.

Currently, for some battery models, line welding is used in welding between the tab and the electrode adapting piece. In order to increase a welding area, a wavy welding trajectory may be used. Due to a rapid change in a curvature radius in a transition point region of the welding trajectory, energy may concentrate at the transition point region during welding, generating accumulated heat that penetrates through the tab and burns an active material inside the battery.

### SUMMARY

Given the aforementioned problem, the disclosure provides a battery and an electronic device. A curvature radius R at any point of welding mark is greater than or equal to 0.5mm, which may avoid concentration of welding energy and an explosion point problem, ensure welding quality, and improve product qualification rate.

The disclosure provides a battery including a housing assembly, a bare cell, and an electrode adapting piece. The bare cell is disposed within the housing assembly and includes a positive electrode piece, a negative electrode piece, and a separator. The positive electrode piece, the separator, and the negative electrode piece are stacked sequentially and wound around a winding axis. An end of the bare cell along the winding axis is provided with a tab. The electrode adapting piece is welded with the tab, and forms at least one continuous welding mark. At least part of the welding mark extends from an outer periphery to an inner periphery of the bare cell. The welding mark includes an arc segment. A curvature radius at any point of the welding mark is greater than or equal to 0.5mm.

In some embodiments, the welding mark has an extend reference line. The extension reference line divides the welding mark into multiple welding segments sequentially arranged in an extending direction of the extend reference line. Any two adjacent welding segments are respectively located on two opposite sides of the extend reference line.

In some embodiments, the extension reference line is a straight line.

In some embodiments, among the welding segments, at least all welding segments except those located at both ends of the welding mark have transition points. A distance between the transition point and the extension reference line is greater than a distance between any point on both sides of the transition point and the extend reference line. The transition point is located on the arc segment.

In some embodiments, the distance between the transition points of any two welding segments and the extension reference line is equal.

In some embodiments, any two adjacent welding segments are centrally symmetric about a connection point therebetween.

In some embodiments, the welding segment is arc-shaped, or the welding segment includes an arc segment and a non-arc segment located on both sides of the arc segment.

In some embodiments, when the welding segment is arc-shaped, the welding segment is a part of a circle.

In some embodiments, a height-to-span ratio A of the welding segment satisfies: 0<A<3, where A=H/L, H is a distance between the transition point and the extend reference line, and L is the length of a line connecting the two ends of the welding segment.

In some embodiments, the height-to-span ratio A of the welding segment satisfies: 0.25≤A≤1.

In some embodiments, a value range of a width w of the solder is 0.2mm to 0.8mm.

In some embodiments, a curvature radius Rₘᵢₙ at a minimum curvature radius point on the welding mark satisfies: 2Rₘᵢₙ-w≥0.5mm.

In some embodiments, the welding mark has a first end close to a center of the bare cell along the extension reference line and a second end away from the center of the bare cell. A distance L1 between the first end and the second end satisfies: 6mm≤L1≤15mm, and/or a spacing L2 between the first end and the center of the bare cell in a direction of the extension reference line satisfies: 0mm≤L2≤10mm, and/or a maximum spacing L3 between the second end and an edge of the bare cell in the direction of the extension reference line satisfies: 0mm≤L3≤10mm.

In some embodiments, multiple of the welding marks are provided, the extension reference line of each welding mark extends in the radial direction of the bare cell, and the welding marks are spaced apart in the circumferential direction of the bare cell.

In some embodiments, multiple of the welding marks are provided, the welding marks are divided into several welding groups. The several welding groups are spaced apart in the circumferential direction of the bare cell. Each of the welding groups includes the welding marks parallel to each other and spaced apart. In each of the welding groups, an extension reference line of one of the welding marks extends in the radial direction of the bare cell. A spacing L4 between two adjacent welding marks belonging to the same welding group satisfies: 0.5mm≤L4≤5mm.

In some embodiments, at an end of the bare cell along the winding axis. The end part of the separator extends beyond the end part of the positive electrode piece. The end part of the negative electrode piece extends beyond the end part of the separator. A portion of the negative electrode piece that extending beyond the separator includes a tab. The tab includes multiple independently bendable connecting pieces. All of the connecting pieces are bent towards the center of the bare cell. The multiple connecting pieces after bending form a tab end. A spacing D in the axial direction of the bare cell between the tab end and the separator has a value range of: 1mm≤D≤2mm.

In some embodiments, the tab is a copper tab. The electrode adapting piece is a copper sheet.

A second aspect of the disclosure provides an electronic device including the battery according to a first aspect of the disclosure.

According to the battery of the disclosure, the welding mark of the tab of the bare cell and the electrode adapting piece includes the arc segment. The curvature radius R at any point on the welding mark is greater than or equal to 0.5mm, which may at least increase the distance between the parts on both sides of the transition point of the arc segment, avoid overlap of heat-affected zones on both sides of the transition point, avoid concentration of welding energy and an explosion point problem, and avoid welding heat penetrating the tab and burning the active material and the separator inside the bare cell. Thus, welding quality is ensured, a product qualification rate is improved, which facilitates large-scale production and application.

### BRIEF DESCRIPTION OF THE DRAWINGS

In order to more clearly describe the embodiments of the disclosure or the technical solutions in the prior art, a brief introduction is made below to the drawings needed in the description of the embodiments or the prior art. Evidently, the drawings described below are some embodiments of the disclosure. For those skilled in the art, other drawings may be obtained based on these drawings without creation.
FIG.1 is a schematic view of a structure of a battery according to some embodiments of the disclosure.
FIG. 2 is a cross-sectional view of FIG. 1 along a section A-A.
FIG. 3 is a schematic view of a structure of a bare cell according to some embodiments of the disclosure.
FIG. 4 is a schematic view of welding mark distribution of a battery according to some embodiments of the disclosure.
FIG. 5 is a schematic view of welding mark distribution of a battery according to another embodiments of the disclosure.
FIG. 6 is a schematic view of a welding mark structure of a battery according to some embodiments of the disclosure.
FIG. 7 is a schematic view of a welding mark structure according to some embodiments of the disclosure.
FIG. 8 is a schematic view of a welding mark structure according to some embodiments of the disclosure.
FIG. 9 is a schematic view of a welding mark structure according to some embodiments of the present utility model.
FIG. 10 is a schematic view of a welding mark structure according to some embodiments of the disclosure.
FIG. 11 is a schematic view of a welding mark structure according to some embodiments of the disclosure.
FIG. 12 is a schematic view of a welding mark structure according to some embodiments of the disclosure.
FIG. 13 is a schematic view of a formation process of welding mark according to an embodiment of the disclosure.
FIG. 14 is a welding effect view when a high-span ratio of welding mark is 0.25.
FIG. 15 is a welding effect view when a high-span ratio of welding mark is 0.5.
FIG. 16 is a welding effect view when a high-span ratio of welding mark is 1.
FIG. 17 is a welding effect view when a high-span ratio of welding mark is 2.
FIG. 18 is a welding effect view when a high-span ratio of welding mark is 3.

### DESCRIPTION OF THE EMBODIMENTS

In order to make the aforementioned purposes, features, and advantages of the embodiments of the disclosure comprehensible, the technical solutions in the embodiments of the disclosure are described clearly and completely in conjunction with the accompanying drawings of the embodiments of the disclosure. Obviously, the described embodiments are only a part of the embodiments of the disclosure, not all of the embodiments. Based on the embodiments of the disclosure, all other embodiments obtained by those skilled in the art without creation are within the protection scope of the disclosure.

With the development of economy in society, batteries are used as energy storage and supply devices in many electrical devices. The electronic devices may be vehicles, mobile phones, portable devices, laptops, ships, spacecraft, electric toys, and electric tools, etc. Vehicles may be gasoline vehicles, gas vehicles, or new energy vehicles. New energy vehicles may be pure electric vehicles, hybrid vehicles, or range-extended vehicles, etc. Spacecraft may include airplanes, rockets, space shuttles and spaceships, etc. Electric toys may include fixed or mobile electric toys, for example, game consoles, electric car toys, electric ship toys, and electric airplane toys. Electric tools may include metal cutting electric tools, grinding electric tools, assembly electric tools, and railway electric tools such as electric drills, electric grinders, electric wrenches, electric screwdrivers, electric hammers, impact drills, concrete vibrators, and electric planers. The electronic devices may also be battery packs, battery modules, etc. The embodiments of the disclosure do not impose special restrictions on the aforementioned electronic devices.

An electronic device may include a device body and a battery. The device body may include a battery compartment. The battery is disposed in the battery compartment and electrically connected to the device body. For example, a power supply interface may be provided in the battery compartment, and the battery may be connected to the power supply interface.

In the embodiment of the disclosure, the battery may be a primary battery or a secondary battery. The primary battery refers to a battery that cannot be recharged and reused after discharge. The secondary battery refers to a battery that can continue to be used after discharge by activating active materials through charging. The battery may be a lithium-ion battery, sodium-ion battery, sodium-lithium-ion battery, lithium metal battery, sodium metal battery, lithium-sulfur battery, magnesium-ion battery, nickel-cadmium battery, etc., which is not limited by the embodiments of the disclosure.

Currently, for some battery models, line welding is used in welding between a tab and an electrode adapting piece. In order to increase welding areas, a wavy welding trajectory may be used. Due to a rapid change in a curvature radius in some regions of the welding trajectory, welding energy may concentrate in the corresponding regions and generate accumulated welding heat that penetrates the tab and even burns the active materials inside the battery.

In view of this, a battery and an electronic device are provided in this embodiment. A radius R of curvature at any point on the welding mark satisfies R greater than or equal to 0.5mm, which may increase a distance between any two points on the welding trajectory, avoid overlap of heat-affected zones in adjacent welding regions, avoid concentration of welding energy and an explosion point problem, and avoid welding heat penetrating the tab and burning the active material and the separator inside the bare cell. Thus, welding quality is ensured, and a product qualification rate is improved, which facilitates large-scale production and application. In addition, the radius R of curvature in the disclosure refers to the curvature radius of the line obtained by connecting the midpoints in the width direction of the welding mark.

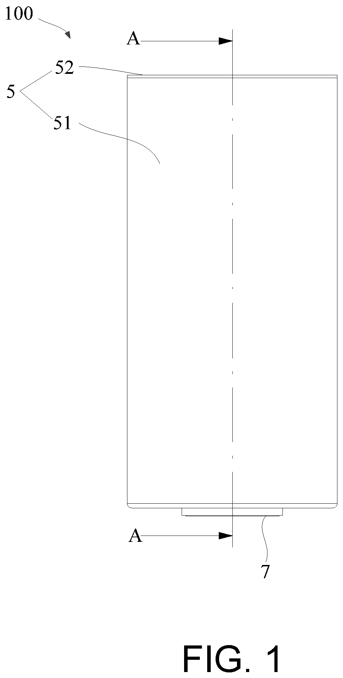

In combination with FIG.1 to FIG.18, a battery 100 of this embodiment includes a housing assembly 5, a bare cell 1, and an electrode adapting piece 2.

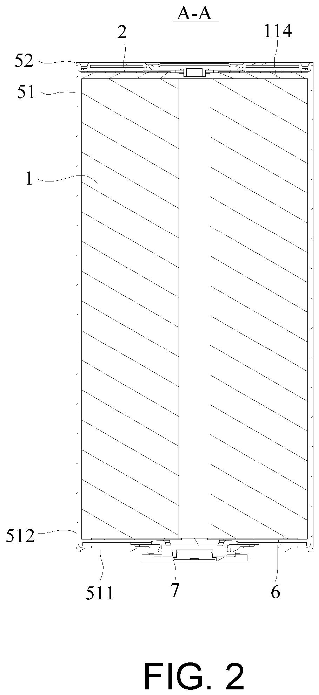

Referring to FIG.1 and FIG.2, the housing assembly 5 may include a shell 51 and a cover plate 52. An end of the shell 51 is provided with an opening. An inner cavity of the shell 51 serves as an accommodating cavity for the bare cell 1. The shell 51 includes a top wall 511 opposite to the cover plate 52 and a sidewall 512 surrounding a top wall 511. The top wall 511 and the sidewall 512 are integrally formed or may also be a separate structure. The cover plate 52 may be covered at the opening of the shell 51.

The battery 100 may further include a positive electrode collector plate 6 and a pole 7. The pole 7 is inserted through the top wall 511, is welded and connected to the positive electrode collector plate 6, and serves as a positive output end of the battery 100.

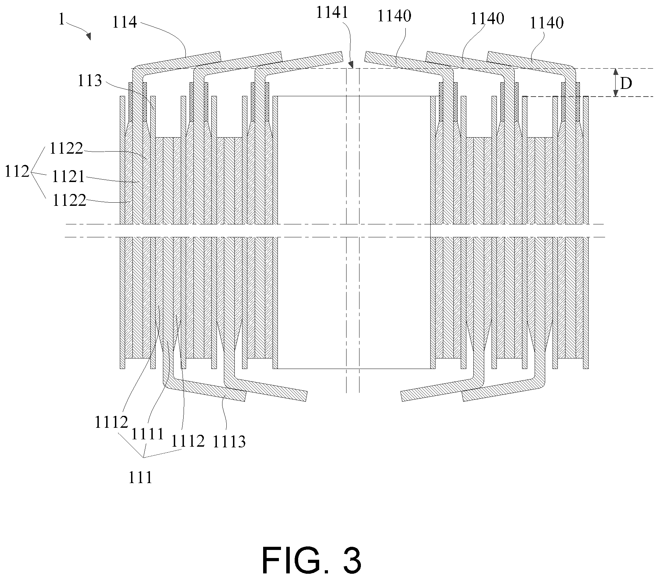

Referring to FIG. 3, the bare cell 1 may be disposed in the accommodating cavity. The bare cell 1 may include a positive electrode piece 111, a negative electrode piece 112, and a separator 113. The positive electrode piece 111 includes a positive electrode current collector 1111 and a positive electrode active coating layer 1112 coated on a surface of the positive electrode current collector 1111. The negative electrode piece 112 includes a negative electrode current collector 1121 and a negative electrode active coating layer 1122 coated on a surface of the negative electrode current collector 1121. Taking the battery 100 as a cylindrical battery as an example, the positive electrode piece 111, the separator 113, and the negative electrode piece 112 are stacked in sequence and wound around a winding axis to form a wound bare cell 1.

An end of the bare cell 1 along the winding axis is provided with a tab 114. The tab 114 may be a negative electrode tab of the bare cell 1. An end of the bare cell 1 facing the top wall 511 is provided with a positive electrode tab 1113. The positive electrode tab 1113 is electrically connected to the pole 7 through the positive electrode collector plate 6.

The tab 114 may include multiple connecting pieces 1140, that is, the connecting pieces 1140 together form the tab 114. Each connecting piece 1140 is an uncoated active coating layer foil region extending from the body of the bare cell 1. At least part of the connecting pieces 1140 are distributed in the circumferential direction of the bare cell 1. For example, the connecting pieces 1140 may be arranged in an array in the circumferential direction and the radial direction of the bare cell 1.

It should be understood that winding is performed after stacking the positive electrode piece 111, the separator 113, and the negative electrode piece 112, and on the negative electrode side of the bare cell 1, due to a portion where the negative electrode current collector 1121 extends beyond the negative electrode active coating layer 1122, that is, when the foil area of the negative electrode current collector 1121 is a continuous surface, more wrinkles may appear during flattening. However, the connecting pieces 1140 in this embodiment are formed by cutting the foil area into multiple segments, which may reduce a length of each connecting piece 1140 in the circumferential direction of the bare cell 1. When the connecting pieces 1140 are bent and stacked together, the generated wrinkles may be reduced or even avoided, which makes the tab end 1141 formed by the bent connecting pieces 1140 more flat. Understandably, the tab end 1141 is a surface at an end of the bare cell 1 after the connecting pieces 1140 are bent and stacked, which helps improve a welding effect between the tab 114 and the electrode adapting piece 2. Correspondingly, on a positive electrode side of the bare cell 1, a foil region of the positive electrode current collector 1111 may also be divided into multiple connecting pieces.

Referring to FIG. 1 to FIG. 3, the electrode adapting piece 2 may be a copper sheet, to facilitate welding with the copper foil as the tab 114. The electrode adapting piece 2 is welded to the tab 114, forming at least one continuous welding mark 3. The continuous welding mark 3 means there is no interruption point on a single welding mark 3. At least part of the welding mark 3 extends from the outer periphery to the inner periphery of the bare cell 1. Since the positive electrode piece 111, the separator 113, and the negative electrode piece 112 are wound around a winding needle to form the bare cell 1, a center hole is formed at a center position of the bare cell 1 in the radial direction, making the cross-section of the bare cell 1 perpendicular to a center axis appear as a ring shape, with the outer periphery of the bare cell 1 being an outer contour position of a ring, and the inner periphery being an inner contour position of the ring. Thus, when the electrode adapting piece 2 is welded to the tab 114, the electrode adapting piece 2 may be welded to at least part of the connecting pieces 1140 to form the welding mark 3. Moreover, at least part of the welding mark 3 extends in the radial direction, enabling as many layers of the tab 114 as possible to connect to the electrode adapting piece 2, which increases connection areas and reduces internal resistance of the battery 100. A welding method may be laser welding, ultrasonic welding, or other welding methods. Optionally, the electrode adapting piece 2 may further be connected to the shell 51, so that the shell 51 serves as a negative output end of the battery 100.

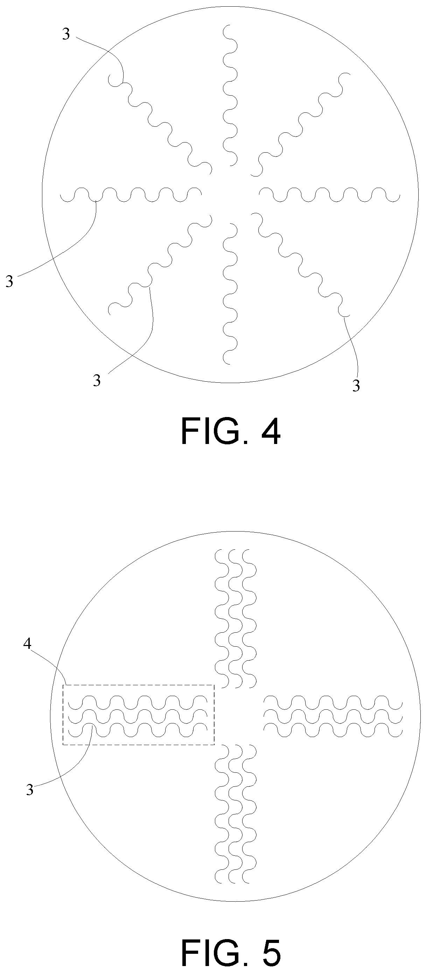

Referring to FIG. 4 to FIG. 12, the welding mark 3 includes an arc segment 32, and the curvature radius at any point of the welding mark 3 is greater than or equal to 0.5mm. For example, the welding mark 3 may be formed solely by the arc segment 32, in which case the curvature radius at any point on each arc segment 32 is greater than or equal to 0.5mm; or, the welding mark 3 may be formed by the arc segment 32 and a straight line segment, in which case the curvature radius at any point on the arc segment 32 is greater than or equal to 0.5mm, while the curvature radius of the straight line segment is infinite, meaning that the curvature radius of the straight line segment satisfies a requirement of being greater than or equal to 0.5mm. In this way, the curvature radius at any point of the welding mark 3 may be greater than or equal to 0.5mm.

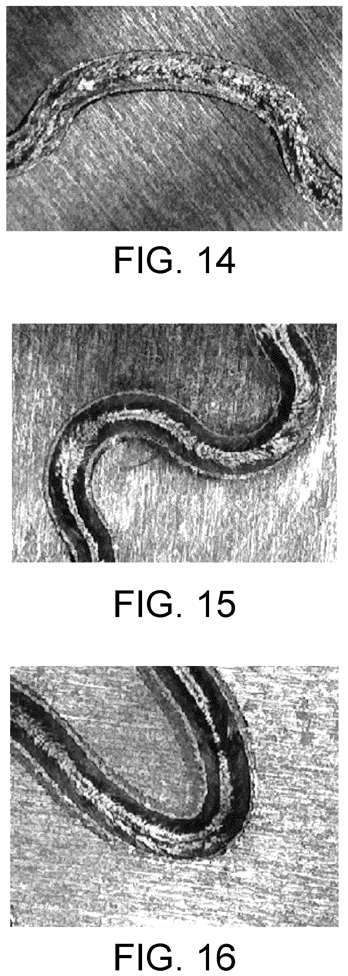

When the arc segment 32 exists in the welding mark 3, during the welding process, a welding equipment 200 (for example, a welding head of the laser welding equipment 200) reduces welding travel speed at the minimum curvature radius point of the arc segment 32 (i.e., as transition point G mentioned below). The parts on both sides of the transition point G are relatively close to each other, causing the part on either side of the transition point G to be within the heat-affected zone of the other side. That is, the heat-affected zones on both sides of the transition point G overlap, thereby resulting in welding energy concentration at the transition point G and the surrounding region, which causes a problem of welding explosion points, as shown in FIG. 16 to FIG. 18. To avoid the welding energy concentration at the transition point G, in this embodiment, the welding mark 3 is constructed with a curvature radius greater than or equal to 0.5mm at any point, of course, a specific value of the curvature radius at each point of the welding mark 3 may be reasonably chosen according to needs. By having the curvature radius satisfy the aforementioned range, it may at least ensure that ta transition angle at the transition point G of the arc segment 32 becomes smaller, a distance between the parts on both sides of the transition point G becomes larger, thereby avoiding the overlap of the heat-affected zones on both sides of the transition point G, and further avoiding the problem of welding energy concentration, as shown in FIG. 14 to FIG. 15.

According to the battery 100 of the embodiment of the disclosure, the welding mark 3 between the tab 114 of the bare cell 1 and the electrode adapting piece 2 includes an arc segment 32, and the curvature radius at any point on the welding mark 3 is greater than 1mm, which may at least increase a distance between the parts on both sides of the minimum curvature radius point of the arc segment 32, avoid the overlap of heat-affected zones on both sides of the minimum curvature radius point, and avoid the concentration of welding energy and the explosion point problem, and avoid the welding heat penetrating the tab and burning the active material and the separator inside the bare cell 1. Thus, the welding quality is ensured, and product qualification rate is improved, which facilitates large-scale production and application.

Referring to FIG. 4 to FIG. 12, the welding mark 3 has an extension reference line N. The extension reference line N is a virtual reference line, representing the overall extension direction of the welding mark 3 welding trajectory. The extension reference line N may be a straight line or a curve such as U-shaped one and spiral one. The extension reference line N divides the welding mark 3 into multiple welding segments 31. The welding segments 31 are sequentially arranged in the extension direction of the extension reference line N, and any two adjacent welding segments 31 are located on two opposite sides of the extension reference line N. As such, at least all welding segments 31 except those located at both ends of the welding mark 3 may protrude in a direction away from the extension reference line N. At this time, the tab 114 and the electrode adapting piece 2 have a wavy welding mark 3 there between, so that the welding mark 3 may connect several connecting pieces 1140 distributed in the circumferential direction and several connecting pieces 1140 distributed in the radial direction to the electrode adapting piece 2, which increases the welding area, improves connection intensity, and helps to improve reliability of welding.

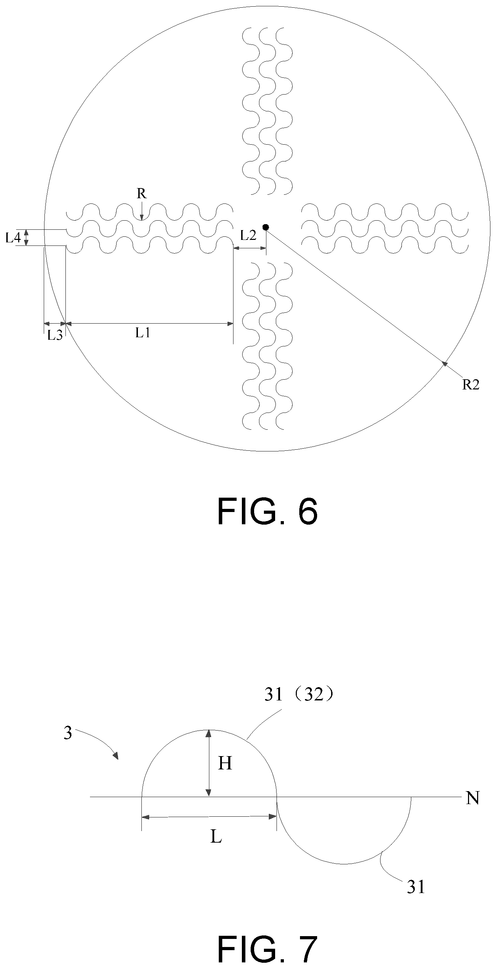

In a specific example, referring to FIG. 6 to FIG. 12, the extension reference line N is a straight line. At this time, the welding segments 31 may be sequentially distributed along the straight line. As such, the construction of the welding mark 3 is simplified, compared with a scheme where the extension reference line N is a curve, which may reduce technical difficulty of welding and be conducive to ensuring welding quality.

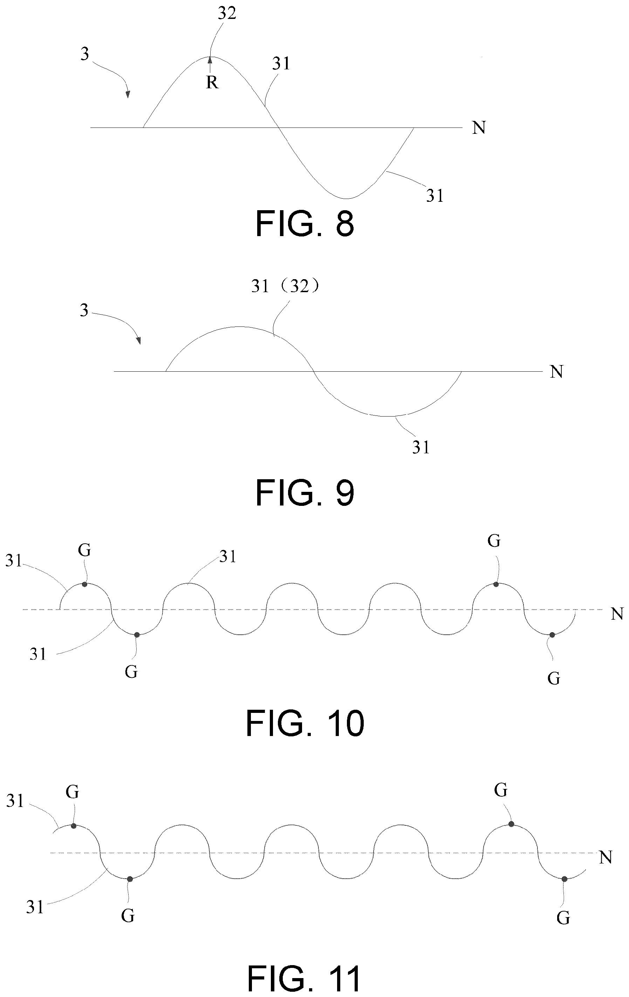

Further, referring to FIG.10 to FIG.12, in the welding segments 31, at least all welding segments 31 except those located at both ends of the welding mark 3 have a transition point G, where a distance between the transition point G and the extension reference line N is greater than a distance between any point on both sides of the transition point G and the extension reference line N. In other words, the transition point G is a point on the welding segment 31 that is farthest from the extension reference line N, and at least the part where the transition point G is located on the welding segment 31 forms the arc segment 32 of the welding mark 3.

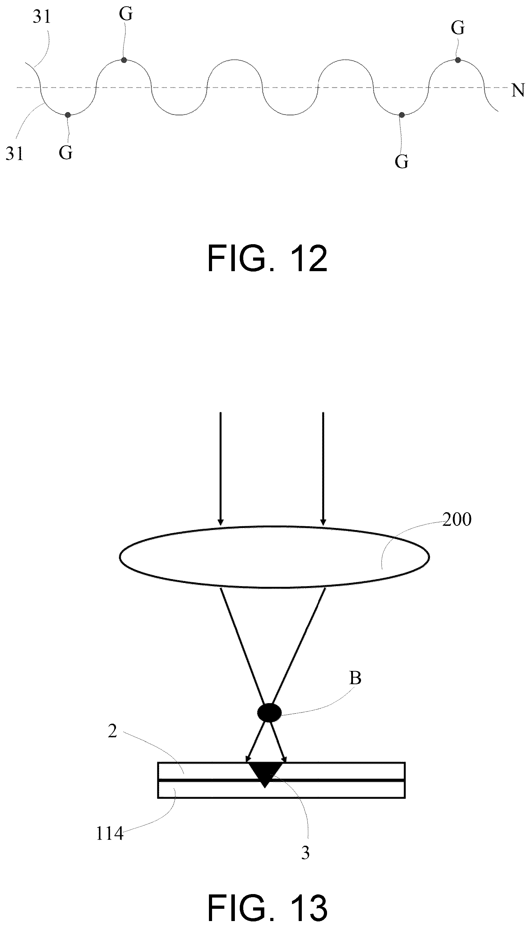

For example, in welding segments 31 arranged along the straight line, a welding segment 31 close to the outer periphery of the bare cell 1 is a first end welding segment, and a welding segment 31 close to the inner periphery of the bare cell 1 is a last end welding segment. In this embodiment, all welding segments except the first end welding segment and the last end welding segment have transition points G, while the first end welding segment and the last end welding segment may both not have transition points G, as shown in FIG. 12. Alternatively, at least one of the first end welding segment and the last end welding segment may also have a transition point G, as shown in FIG. 10 and FIG. 11.

Optionally, referring to FIG. 11, in a case where the first end welding segment and the last end welding segment have a transition point G, the first end welding segment and the last end welding segment may have one intersection with the extension reference line N. At this time, only the parts of the first end welding segment and the last end welding segment located on one side of the transition point G extend to the extension reference line N, and the parts on the other side of the transition point G do not intersect with the extension reference line N. Alternatively, referring to FIG. 10, the first end welding segment and the last end welding segment each have two intersections with the extension reference line N, that is, the parts on both sides of the transition point G extend to the extension reference line N.

The part where the transition point G of each welding segment 31 is located forms an arc segment 32. For example, each welding segment 31 may be entirely formed as arc-shaped. In this case, the welding segment 31 is the aforementioned arc segment 32; or, the transition point G region of each welding segment 31 is arc-shaped, and the two sides of the transition point G region may be of other shapes. In this case, only the part where the transition point G is located in the welding segment 31 constructs the aforementioned arc segment 32.

In some embodiments, a distance between the transition point G of any two welding segments 31 and the extension reference line N may be equal. In other words, the extension reference line N is located in the middle part of the welding mark 3 in its own height direction.

In some embodiments, referring to FIG. 4 to FIG. 6 and FIG. 10, any two adjacent welding segments 31 are centrally symmetric about a connection point therebetween, where central symmetry means that for two adjacent welding segments 31, one segment coincides with the other after rotating 180° around their connection point. At this time, the opening directions of any two adjacent welding segments 31 are opposite. Thus, the welding mark 3 composed of the welding segments 31 forms a wave shape as a whole, that is, the welding trajectory of the electrode adapting piece 2 and multiple tabs 114 is wave-shaped. Since the extending shape of the welding mark 3 is not a straight line and has a certain span in the circumferential direction of the bare cell 1, each welding segment 31 of the welding mark 3 may connect several connecting pieces 1140 distributed in the circumferential direction, while the entire welding mark 3 may also connect several connecting pieces 1140 distributed in the radial direction. Thereby, the connection area between the electrode adapting piece 2 and the tab 114 is increased, the welding intensity is improved, the current transmission path is reduced, and the internal resistance of the battery 100 is lowered.

In some embodiments, referring to FIG. 7 to FIG. 9, the welding segment 31 may be arc-shaped. For example, the welding segment 31 may be circular arc-shaped or non-circular arc-shaped, at which time the overall shape of the welding mark 3 is close to a sinusoidal trajectory. Alternatively, the welding segment 31 includes an arc segment 32 and non-arc segments 32 located on both sides of the arc segment 32. The non-arc segment 32 may be a straight line segment or other shapes. As such, it may be ensured that each welding segment 31 of the welding mark 3 has a certain span in the circumferential direction to connect the connecting pieces 1140 distributed in the circumferential direction. Moreover, the form of the welding mark 3 is more diverse, and the structure thereof is relatively simple, which is easy to implement.

Preferably, the welding segment 31 is formed as a part of a circle, and in particular to be semi-circular, which may make the transition point G of the welding mark 3 transition smoothly. Moreover, the curvature radius of all points on the welding mark 3 is the same, facilitating the smooth movement of the laser welding equipment, with good welding quality at each point, uniform welding depth, which may better avoid a problem of energy accumulation and generating explosion points, and the use of a semi-circular trajectory may make the welding mark weld the connected tabs 114, thereby making the welding tension higher and the quality more reliable. When the welding segment 31 is semi-circular, preferably, a diameter of the welding segment 31 is 1mm to 2mm, to fully avoid the problem of energy accumulation and generating explosion points at the transition point G of the welding mark 3.

In some embodiments, referring to FIG. 7, a height-to-span ratio A of the welding segment 31 satisfies: 0<A<3, specifically, the height-to-span ratio A of the welding segment 31 = H/L, where H is a distance between the transition point G of the welding segment 31 and a line connecting the two ends of the welding segment 31, that is, a height of the welding segment 31; L is a length of the line connecting the two ends of the welding segment 31, that is, the span of the welding segment 31. A value of H affects the span of the welding segment 31 in the circumferential direction of the bare cell 1, thereby affecting the welding area between the electrode adapting piece 2 and the tab 114 in the circumferential direction, as well as the overcurrent capability at the welding mark 3, while L affects the size of the corner at the welding segment 31.

For example, a height-to-span ratio of the welding segment 31 may be 0.5, 1, 1.5, 2, 2.5, etc., which is not limited by the disclosure, of course. In this way, it may be ensured that the height of the welding segment 31 in the circumferential direction of the bare cell 1 is relatively large, thereby increasing a number of connecting pieces 1140 covered by the welding segment 31 in the circumferential direction, to increase the welding area, and improve the overcurrent capability. In addition, the transition point G of the welding segment 31 becomes smoother to avoid concentration of welding energy.

Further, the height-to-span ratio A of the welding segment 31 satisfies: 0.25≤A≤1. For example, the height-to-span ratio of the welding segment 31 may be 0.25, 0.5, 0.6, 0.7, 0.8, 0.9, etc., which is not limited by the disclosure, of course. In this way, while ensuring the welding area of the welding segment 31, the smoothness of the welding segment 31 at the transition point G is further improved to avoid concentration of welding energy and improve welding quality.

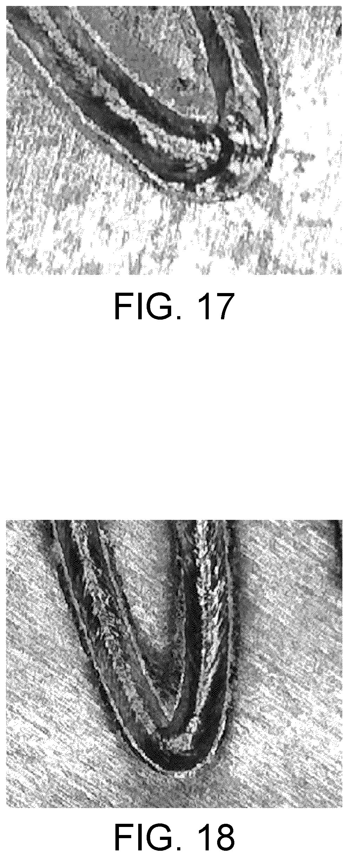

Referring to FIG.14 to FIG.18, where FIG.14 shows the welding effect at the transition point G of the welding segment 31 when the height-to-span ratio of the welding segment 31 is 0.25; FIG.15 shows the welding effect at the transition point G of the welding segment 31 when the height-to-span ratio of the welding segment 31 is 0.5; FIG.16 shows the welding effect at the transition point G of the welding segment 31 when the height-to-span ratio of the welding segment 31 is 1; FIG.17 shows the welding effect at the transition point G of the welding segment 31 when the height-to-span ratio of the welding segment 31 is 2; and FIG.18 shows the welding effect at the transition point G of the welding segment 31 when the height-to-span ratio of the welding segment 31 is 3. According to FIG. 14 to FIG. 18, it may be seen that when the height-to-span ratio is 3, due to the excessive transition angle at the transition point G of the welding segment 31, and the close distance between the parts on both sides of the transition point G, the region around the transition point G is greatly affected by welding heat, resulting in a dark region caused by the concentrated welding heat, which is not conducive to improving welding quality between the tab 114 and the electrode adapting piece 2. When the height-to-span ratio is 2, the region around the transition point G of the welding segment 31 is less affected by welding heat, which may enhance the welding quality between the tab 114 and the electrode adapting piece 2. When the height-to-span ratio is 0.25, 0.5, or 1, the small problem of the concentrated welding heat in the region around the transition point G of the welding segment 31 occurs, basically not affected by the concentrated welding heat, which may reliably ensure welding quality between the tab 114 and the electrode adapting piece 2.

In some embodiments, a width w of the welding mark 3 ranges from 0.2mm to 0.8mm, that is, a width w of each welding segment 31 in the direction perpendicular to its own extension direction ranges from 0.2mm to 0.8mm. For example, the width w of the welding mark 3 may be 0.2mm, 0.3mm, 0.4mm, 0.5mm, 0.6mm, 0.7mm, or 0.8mm, which is not limited by the disclosure, of course. In this way, the width of the welding mark 3 being too small may be avoided, for example, less than 0.2mm, resulting in too small welding area and lower welding reliability. A larger resistance value at the welding mark 3 affecting overcurrent capability may also avoid the width of the welding mark 3 being too large, for example, greater than 0.8mm, resulting in the heat-affected zones on both sides of the transition point G of the welding segment 31 overlapping and generating a phenomenon of welding energy concentration. In summary, it may be ensured that the welding area at the welding mark 3 is large enough, thereby ensuring overcurrent capability, and also ensuring as much as possible that there is no welding energy concentration that affects welding quality.

In addition, referring to FIG. 13, in a laser welding method, when a welding focus B is closer to a welding surface (that is, a surface of the electrode adapting piece 2), the welding heat is more concentrated, which is more likely to cause welding explosion point problems. When the welding focus B is farther from the welding surface, the welding energy is more dispersed, making it difficult to penetrate the electrode adapting piece 2 to reach the tab 114, which causes false welding or pseudo welding. Therefore, in this embodiment, by maintaining an appropriate distance between the welding focus B and the welding surface, a width range of the welding mark 3 may be maintained at 0.2mm to 0.8mm. In this way, the welding energy concentration leading to welding explosion point problems may be avoided, and the connection intensity between the electrode adapting piece 2 and the tab 114 may be ensured, with better process and higher reliability.

In some embodiments, referring to FIG. 6, a range of a value of the diameter R2 of the bare cell 1 may be: 22mm≤R2≤45.2mm. For example, the diameter R2 of the bare cell 1 may be 22mm, 25mm, 28mm, 30mm, 35mm, 40mm, 45mm, or 45.2mm, which is not limited by the disclosure, of course. The value of the diameter R2 of the bare cell 1 may be reasonably chosen according to actual needs, to fully ensure an energy storage effect of the battery 100.

In some embodiments, referring to FIG. 6, the welding mark 3 has a first end close to the center of the bare cell 1 along the extension reference line and a second end away from the center of the bare cell 1. A distance L1 between the first end and the second end satisfies: 6mm≤L1≤15mm. For example, the distance L1 between the first end and the second end in the direction of the extension reference line may be 6mm, 7mm, 8mm, 9mm, 10mm, 11mm, 12mm, 13mm, 14mm, or 15mm, which is not limited by the disclosure, of course. A value of the distance L1 between the first end and the second end may be reasonably selected according to actual needs. In this way, it may be ensured that the welding mark 3 covers more layers of the connecting piece 1140 in the radial direction, to ensure the welding area at the welding mark 3, thereby improving the overcurrent capability and connection stability.

In some embodiments, referring to FIG. 6, a spacing L2 between the first end and the center of the bare cell 1 in the direction of the extension reference line satisfies: 0mm≤L2≤10mm. For example, the spacing L2 between the first end and the center of the bare cell 1 in the extension reference line direction may be 0mm, 1mm, 2mm, 3mm, 4mm, 5mm, 6mm, 7mm, 8mm, 9mm, or 10mm, which is not limited by the disclosure, of course. The spacing between the first end and the center of the bare cell 1 in the direction of the extension reference line may be reasonably chosen according to actual needs. In this way, the first end may be positioned as close as possible to the center of the bare cell 1, thereby extending the width of the welding mark 3 in the reference direction, so that the electrode adapting piece 2 is welded with more connecting pieces 1140 in the radial direction to ensure the welding area and improve the overcurrent capability.

In some embodiments, referring to FIG. 6, a maximum spacing L3 between the second end and the edge of the bare cell 1 in the direction of the extension reference line satisfies: 0mm≤L3≤10mm. For example, the spacing L3 between the second end and the edge of the bare cell 1 in the direction of the extension reference line may be 0mm, 1mm, 2mm, 3mm, 4mm, 5mm, 6mm, 7mm, 8mm, 9mm, or 10mm, which is not limited by the disclosure, of course. The spacing between the second end and the edge of the bare cell 1 in the direction of the extension reference line may be reasonably selected according to actual needs. In this way, the second end may be positioned as close as possible to the edge of the bare cell 1, thereby extending the width of the welding mark 3 in the reference direction, so that the electrode adapting piece 2 is welded with more connecting pieces 1140 in the radial direction to ensure the welding area and improve the overcurrent capability.

In some embodiments, referring to FIG. 4, multiple of the welding marks 3 are provided. The extension reference line N of each welding mark 3 extends in the radial direction of the bare cell 1, with the welding marks 3 spaced apart in the circumferential direction of the bare cell 1. In this case, the extension lines of the welding marks 3 may converge at the center of the bare cell 1. As such, the welding marks 3 may be distributed relatively evenly in the circumferential direction of the bare cell 1, to ensure relatively uniform overcurrent capability at various positions in the circumferential direction, while the arrangement method is simple and easy to implement.

In other embodiments, referring to FIG. 5 and FIG. 6, multiple of the welding marks 3 are provided. The welding marks 3 are divided into several welding groups 4. The several welding groups 4 are spaced apart in the circumferential direction of the bare cell 1. Each welding group 4 includes several parallel and spaced welding marks 3. Furthermore, in each welding group 4, the extension reference line N of one of the welding marks 3 extends in the radial direction of the bare cell 1 . A spacing L4 between two adjacent welding marks 3 belonging to the same welding group 4 satisfies: 0.5mm≤L4≤5mm. For example, the spacing L4 between two adjacent welding marks 3 belonging to the same welding group 4 may be 0.5mm, 1mm, 1.5mm, 2mm, 2.5mm, 3mm, 3.5mm, 4mm, 4.5mm, or 5mm, which is not limited by the disclosure, of course. The spacing between two adjacent welding marks 3 belonging to the same welding group 4 may be reasonably selected according to actual needs. In this way, a problem of welding energy concentration between two adjacent welding marks 3 may be avoided when the two are too close. For example, a distance less than 0.5mmmay avoid the situation where two adjacent welding marks 3 are too far apart. For example, a distance greater than 5mm may result in a lower distribution density of welding marks 3 and affect the overcurrent capability between the tab 114 and the electrode adapting piece 2.

In some embodiments, referring to FIG. 3, at an end of the bare cell 1 along the winding axis (for example, the negative electrode end of the bare cell 1), an end part of the separator 113 extends beyond an end part of the positive electrode piece 111, an the end part of the negative electrode piece 112 extends beyond the end part of the separator 113. A portion of the negative electrode piece 112 that extends beyond the separator 113 includes the tab 114. The tab 114 includes multiple independently bendable connecting pieces 1140. Furthermore, all of the connecting pieces 1140 of the separator 113 are bent toward the center of the bare cell 1, and the connecting pieces 1140 after bending form a tab end 1141. In two radially adjacent connecting pieces 1140, the connecting piece 1140 closer to the outside may overlap with the connecting piece 1140 closer to the inside, to ensure that the two radially adjacent connecting pieces 1140 may be connected, thereby achieving overcurrent.

A spacing D between the tab end 1141 and the separator 113 in the axial direction of the bare cell 1 has a value range of: 1mm≤D≤2mm. For example, D may be 1mm, 1.2mm, 1.4mm, 1.6mm, 1.8mm, and 2mm. If the value of D is less than 1mm, it may cause the welding point between the tab end 1141 and the electrode adapting piece 2 to be too close to the separator 113, and the heat generated by welding may easily cause the separator 113 to shrink, leading to contact between the positive electrode piece 111 and the negative electrode piece 112 resulting in internal short circuit. If the value of D is greater than 2mm, it may cause a relative reduction in the region of the negative electrode active coating layer 1122, which reduces energy density of the battery 100. Controlling the value of D within a range of 1mm≤D≤2mm may, in combination with the welding method of the disclosure, improve the welding yield while maintaining a higher energy density of the battery 100.

In some embodiments, the tab 114 is a copper tab 114, and the electrode adapting piece 2 is a copper sheet. Since copper has stronger heat conduction and absorption capacity, higher sensitivity to high temperature, and greater thermal impact on the negative electrode. Additionally, the copper negative electrode tab 114 is easily collapsed during welding, so it is closer to the separator 113 under the same pressure. Therefore, adopting the welding mark scheme of this embodiment may avoid problems such as explosion points, poor welding when welding the copper tab 114 and the electrode adapting piece 2, as well as affecting and damaging the separator.

The following provides a table of the morphology of the welding mark and the damage detection results of the bare cell when the tab 114 and the electrode adapting piece 2 are welded to form welding mark of different sizes in the disclosure.

**Table 1 Table of welding mark morphology and damage detection results of bare cell**

| Embodiment | Radius of curvature R/mm | Width of welding mark w/mm | Power/W | Welding mark morphology | Separator burning |
|---|---|---|---|---|---|
| 1 | 0.3 | 0.2 | 390 | Severe blackening around welding mark, explosion point occurrence, NG | Yes |
| 2 | 0.3 | 0.8 | 390 | Overlapping welding mark, severe blackening, explosion point occurrence, NG | Yes |
| 3 | 0.4 | 0.2 | 390 | Severe blackening around welding mark, explosion point occurrence, NG | Yes |
| 4 | 0.4 | 0.8 | 390 | Overlapping welding mark, severe blackening, explosion point occurrence, NG | Yes |
| 5 | 0.5 | 0.2 | 390 | Normal welding mark without blackening, OK | No |
| 6 | 0.5 | 0.5 | 390 | Slight blackening around welding mark, OK | No |
| 7 | 0.5 | 0.8 | 390 | Severe blackening in welding mark, explosion point occurrence, NG | Yes |
| 8 | 0.6 | 0.2 | 390 | Normal welding mark without blackening, OK | No |
| 9 | 0.6 | 0.5 | 390 | Slight blackening around welding mark, OK | No |
| 10 | 0.6 | 0.8 | 390 | Severe blackening around welding mark, explosion point occurrence, NG | Yes |
| 11 | 0.7 | 0.2 | 390 | Welding mark is normal without blackening, OK | No |
| 12 | 0.7 | 0.5 | 390 | Normal welding mark without blackening, OK | No |
| 13 | 0.7 | 0.8 | 390 | Slight blackening around welding mark, OK | No |
| 14 | 0.8 | 0.2 | 390 | Normal welding mark without blackening, OK | No |
| 15 | 0.8 | 0.5 | 390 | Normal welding mark without blackening, OK | No |
| 16 | 0.8 | 0.8 | 390 | Normal welding mark without blackening, OK | No |

Through an analysis of the aforementioned table, in the combination of embodiments 1 to 4, it may be seen that when the curvature radius of the welding mark 3 is less than 0.5mm, welding explosion points may be easily caused by concentrated welding energy in the area around the welding mark 3, which may lead to damage of the separator 113 of the bare cell 1. In combination of embodiments 5 to 6, 8 to 9, and 11 to 16, when the curvature radius of the welding mark 3 is greater than or equal to 0.5mm, welding explosion points caused by concentrated welding energy in the region around the welding mark may be avoided, thereby avoiding damage to the separator 113 of the bare cell 1.

In the combination of embodiments 5 to 16, it may be concluded that when the curvature radius Rₘᵢₙ at the minimum curvature radius point of the welding mark 3 and the width w of the welding mark satisfy: 2Rₘᵢₙ-w≥0.5mm, the morphology of the welding mark 3 is better, and the phenomenon of burning the separator 113 may not occur. Through analysis, it may be considered that when the aforementioned relation expression is satisfied, the heat affected zones between the welding mark 3 on both sides of the minimum curvature radius point overlap minimally, and the phenomenon of burning the separator 113 due to secondary welding may not occur.

In summary, it may be seen that the battery 100 of the disclosure, by adjusting the curvature radius of any point on the welding mark 3 between the bare cell 1 and the electrode adapting piece 2 to be greater than or equal to 0.5mm, may avoid the concentration of welding energy and the resulting explosion point problem, thereby ensuring welding quality and improving the product qualification rate of the battery 100.

The electronic device of the third aspect embodiment of the disclosure is described as follows.

The electronic device of this embodiment includes the battery 100 in the aforementioned embodiments.

According to the electronic device of the embodiment of the disclosure, by disposing the battery 100 in the aforementioned embodiments, the battery 100 may more reliably supply power to the electronic device, which is beneficial for improving user experience.

It should be noted that "an embodiment", "the embodiment", "exemplary embodiments", "some embodiments", and the like mentioned in the specification may include specific features, structures, or characteristics, but not every embodiment necessarily includes such specific features, structures, or characteristics. Moreover, such phrases do not necessarily refer to the same embodiment. Furthermore, when specific features, structures, or characteristics are described in connection with an embodiment, implementing such features, structures or characteristics in combination with embodiments, whether explicitly or not explicitly described, is within the knowledge range of those skilled in the art.

Generally, terms should be understood at least partially from the context of use. For example, at least partially based on the context, the term "one or multiple" used in the text may be used to describe any feature, structure, or characteristic in a singular sense, or may be used to describe a combination of features, structures, or characteristics in a plural sense. Similarly, at least partially based on the context, terms such as "a" or "the" may also be understood to convey singular usage or to convey plural usage.

It should be easily understood that the terms "on", "above", and "over" in this disclosure should be interpreted in the broadest manner, such that "on" not only means "directly on something", but also includes the meaning of "on something" with intermediate features or layers therebetween, and "above" or "over" not only includes the meaning of "above" or "over something", but may also include the meaning of "above" or "over something" without intermediate features or layers therebetween (that is, directly on something).

In addition, for ease of explanation, spatial relative terms may be used in the text, such as "below", "beneath", "lower", "above", and "upper", to describe the relationship of one element or feature relative to other elements or features as shown in the figures. The spatial relative terms are intended to encompass different orientations of the device in use or operation in addition to the orientation shown in the drawings. The device may have other orientations (rotated 90 degrees or in other orientations), and the spatial relative descriptive terms used in the text may be interpreted accordingly.

## Claims

1. A battery (100), comprising:
a housing assembly (5);
a bare cell (1), disposed within the housing assembly (5), wherein the bare cell (1) comprises a positive electrode piece (111), a negative electrode piece (112), and a separator, the positive electrode piece (111), the separator (113), and the negative electrode piece (112) stacked sequentially and wound around a winding axis, and an end of the bare cell (1) along the winding axis is provided with a tab (114); and
an electrode adapting piece (2), welded with the tab (114) and forming at least one continuous welding mark (3), the battery (100) is **characterized in that** at least part of the welding mark (3) extending from an outer periphery of the bare cell (1) to an inner periphery, and the welding mark (3) comprising an arc segment (32),
wherein a curvature radius R at any point of the welding mark (3) is greater than or equal to 0.5mm.

2. The battery (100) according to claim 1, wherein the welding mark (3) has an extension reference line (N), the extension reference line (N) divides the welding mark (3) into a plurality of welding segments (31) sequentially arranged in an extending direction of the extension reference line (N), and any two adjacent of the plurality of welding segments (31) are respectively located on two opposite sides of the extension reference line (N).

3. The battery (100) according to claim 2, wherein the extension reference line (N) is a straight line,
wherein among the plurality of welding segments (31), at least all the plurality of welding segments (31) except those located at both ends of the welding mark (3) have transition points (G),
a distance between the transition point (G) and the extension reference line (N) is greater than a distance between any point on both sides of the transition point (G) and the extension reference line (N), and
the transition point (G) is located on the arc segment (32).

4. The battery (100) according to claim 3, wherein a distance from the transition points (G) of any two adjacent of the plurality of welding segments (31) to the extension reference line (N) is equal,
wherein any two adjacent of the plurality of welding segments (31) are centrally symmetric about a connection point therebetween.

5. The battery (100) according to claim 3, wherein each of the plurality of welding segments (31) is arc-shaped, or each of the plurality of welding segments (31) comprises an arc segment (32) and a non-arc segment located on both sides of the arc segment (32) or is a part of a circle.

6. The battery (100) according to claim 4, wherein a height-to-span ratio A of the welding segment (31) satisfies: 0<A<3, wherein A=H/L, H is a distance between the transition point (G) and the extension reference line (N), and L is a length of a line connecting the two ends of each of the plurality of welding segments (31).

7. The battery (100) according to claim 6, wherein the height-to-span ratio A of each of the plurality of welding segments (31) satisfies: 0.25≤A≤1.

8. The battery (100) according to claim 1, wherein a value range of a width w of the welding mark (3) is 0.2mm to 0.8mm.

9. The battery (100) according to claim 8, wherein a curvature radius Rₘᵢₙ at a minimum curvature radius point on the welding mark (3) satisfies: 2Rₘᵢₙ-w≥0.5mm.

10. The battery (100) according to claim 3, wherein the welding mark (3) has a first end close to a center of the bare cell (1) along the extension reference line (N) and a second end away from the center of the bare cell (1), a distance L1 between the first end and the second end satisfies: 6mm≤L1≤15mm; and/or,
a spacing L2 between the first end and the center of the bare cell (1) in a direction of the extension reference line (N) satisfies: 0mm≤L2≤10mm; and/or,
the second end and a maximum spacing L3 between an edge of the bare cell (1) in the direction of the extension reference line (N) satisfies: 0mm≤L3≤10mm.

11. The battery (100) according to claim 3, wherein a number of the welding mark (3) is plural, the extension reference line (N) of each of the plurality of welding marks (3) extends in the radial direction of the bare cell (1), and the plurality of welding marks (3) are spaced apart in the circumferential direction of the bare cell (1).

12. The battery (100) according to claim 3, wherein a number of the welding mark (3) is plural, the plurality of welding marks (3) are divided into several welding groups (4), the several welding groups (4) are spaced apart in the circumferential direction of the bare cell (1),
each of the several welding groups (4) comprises several of the plurality of welding marks (3) parallel to each other and spaced apart, and, in each of the several welding groups (4), an extension reference line (N) of one of the several of the plurality of welding marks (3) extends in the radial direction of the bare cell (1), and
a spacing L4 between two adjacent of the several of the plurality of welding marks (3) belonging to the same welding group (4) satisfies: 0.5mm≤L4≤5mm.

13. The battery (100) according to any one of claims 1-12, wherein at an end of the bare cell (1) along the winding axis, an end part of the separator (113) extends beyond an end part of the positive electrode piece (111), an end part of the negative electrode piece (112) extends beyond the end part of the separator (113), a portion of the negative electrode piece (112) extending beyond the separator (113) comprises the tab (114), the tab (114) comprises a plurality of independently bendable connecting pieces (1140), the plurality of connecting pieces (1140) are all bent towards the center of the bare cell (1), and the plurality of connecting pieces (1140) after bending form a tab end (1141), and
a spacing D between the tab end (1141) and the separator (113) in the axial direction of the bare cell (1) has a value range of: 1mm≤D≤2mm.

14. The battery (100) according to any one of claims 1-13, wherein the tab (114) is a copper tab, and the electrode adapting piece (2) is a copper sheet.

15. An electronic device, comprising the battery (100) according to any one of claims 1-14.
